# EUROPEAN PATENT APPLICATION

(11) **EP 4 684 925 A1**
(43) Date of publication of application: **28.01.2026**
(21) Application number: 24190689.0
(22) Date of filing: 24.07.2024
(51) Int. Cl.: B25J 9/16

(54) **ROBOT PATH PLANNING**

(71) Applicant: KUKA Deutschland GmbH, 86165 Augsburg (DE)
(72) Inventor: Komlosi, Istvan, 4225 Debrecen (HU)
(74) Representative: Wallinger Ricker Schlotter Tostmann

(57) **Abstract**

A method for planning a robot path of a robot arrangement comprising at least one robot comprises providing (S10) an objective group of at least two objective functions (o1, o2) to be optimized simultaneously by a robot path, each objective function mapping a robot path to a numeric value; determining (S20) first values of the objective functions; providing (S20) a first criterion for choosing a robot path from a path group of at least two robot paths which are pareto optimal with respect to the objective group so that for each of said robot paths none of the objective functions can be improved in value without degrading at least one of the other objective function values; determining (S30) a first robot path based on the first values of the objective functions and the first criterion; and at least one cycle of the following steps: updating (S50) the criterion and/or the values of the objective functions; and determining (S60) an updated robot path based on the current values of the objective functions and the current criterion using decision making mitigating a rank reversal between robot paths of the path group. The invention also relates to a method for operating the robot arrangement based on the planned robot path and a system and a computer program, respectively.

## Description

The present invention relates to a method for planning a robot path of a robot arrangement which comprises at least one robot, a method for operating the robot arrangement based on the planned robot path and a system and a computer program, respectively.

When operating robots or planning robot paths, respectively, often two or more factors shall be considered simultaneously. As an easy example, a mobile robot or a robot arm shall move in short time while at the same time energy consumption is low.

The object of the present invention is to improve operating a robot arrangement which comprises at least one robot or planning a robot path of the robot arrangement, respectively.

This object is achieved in particular by a method with the features of claim 1 or 11, respectively. Claims 13, 14 refer to a system or computer program (product), respectively, for performing a method as described herein, subclaims relate to advantageous embodiments.

According to one aspect of the present invention a method for planning a robot path of (or for, respectively) a robot arrangement comprises:
providing a group of two or more objective( functions to be optimized simultaneously by a robot path, wherein each objective function maps a robot path to a one-dimensional or multi-dimensional numeric value. Said group thus is called an objective group. In an embodiment said objective( functions and/or numeric value(s) may comprise fuzzy functions or values, respectively, in particular fuzzy triangular functions or numbers, respectively, and/or interval costs. This may in particular be advantageous when dealing with vagueness, uncertainty and ambiguity.

The robot arrangement may consist of one single robot. Alternatively the robot arrangement may comprise two or more robots. The robot path may comprise a travel of one or more mobile robot bases and/or a trajectory of one or more robot arms, preferably its TCP or the like. The present invention is particularly advantageous for such robot arrangements due to their working conditions, kinematics, safety requirements and the like.

Providing as used herein may comprise, preferably be, defining, selecting, inputting, receiving and/or loading into and/or from a memory.

In a preferred embodiment the method comprises:
- determining values of the objective functions, preferably for a candidate group of different robot path( candidate)s;
- providing, preferably providing at least partially before, after or in parallel to determining said values, a criterion for choosing a robot path from a path group of two or more robot paths which are pareto optimal with respect to the objective group so that for each of said robot paths of the path group none of the objective functions can be improved in value without degrading at least one of the other objective function values, said (robot paths of the) path group preferably being a sub-group or subset, respectively, of the (robot paths from the) candidate group; and
- determining a robot path based on said values of the objective functions and said criterion,
wherein said values, criterion and robot path are called first values, first criterion and first robot path, respectively, without loss of generality.

In a preferred embodiment the method further comprising one or more cycles of the following steps:
- updating
   - the criterion and/or
   - the values of the objective functions; and
- determining an updated robot path based on the current values of the objective functions and the current criterion using decision making mitigating, in a preferred embodiment avoiding, a rank reversal between robot paths of the path group.

In a preferred embodiment the current values of the objective functions are the values updated in the present or current cycle, respectively, if the values have been updated in the present/current cycle, and are the (previous) values of the previous cycle instead if the values have not been updated in the present or current cycle, and the current criterion is the criterion updated in the present/current cycle, respectively, if the criterion has been updated in the present/current cycle, and is the (previous) criterion of the previous cycle instead if the criterion has not been updated in the present/current cycle.

By updating the values of the objective functions in particular the path group of robot paths which are pareto optimal with respect to the objective group may change, in particular one or more new pareto optimal robot paths may occur within the path group and/or one or more previous robot paths which are not pareto optimal any more may vanish from the path group, in particular may disappear (completely) or become invalid, in particular due to dynamic obstacles and/or sensing data update. Accordingly, one or more of said cycles may comprise updating the path group, according to one embodiment updating the candidate group, based on the current values of the objective functions. The path group may comprise, preferably be, the so-called pareto front of feasible non-dominated robot paths with respect to (the objective functions of the) objective group. Accordingly, in a preferred embodiment one or more of the cycles (each) comprises updating the path group based on the current values of the objective functions.

It turned out that, in particular due to
- new pareto optimal robot paths occurring, and/or
- pareto optimal robot paths vanishing, and/or
- the criterion changing (due to being updated)
the rank(ing) of the robot paths within the path group with respect to the criterion may change. It was discovered that this may lead to undesirable changes of the ((re-)planned) path during operation. By using decision making which mitigates or avoids, respectively, a rank reversal between robot paths of the path group, the robot path can - due to the updating - adapt to changing operational conditions like a changing environment, changing mission priorities or the like while at the same time unnecessary and undesirable changes of the robot path just due to the so-called rank reversal phenomenon ("RRR") in decision making can be reduced or avoided, respectively. In particular decision making mitigating a rank reversal of type 1 (change of the best alternative/chosen robot path due to introducing identical or near-identical copies of non-optimal alternatives/paths) and/or type 2 (change of the best alternative/chosen robot path due to replacing a non-optimal alternative/path with a worse one) and/or type 3 (rankings of smaller problems conflicting with the ranking of the alternatives of the original problem due to decomposing the original problem into a set of smaller problems defined on two alternatives at a time and the same objective( functions) and/or type 4 (like type 3 but rankings of smaller problems conflicting with each other) and/or type 5 and/or other, in particular further, cases or types, respectively. For example if the original problem/objective group yields the ranking "path A better than path B better than path C" and the smaller problems defined on two alternatives at a time and the same objectives yield "path A better than path B", "path B better than path C" and "path C better than path A") or the like. In the present context without using decision making mitigating a rank reversal, for example the following effect may occur: given map cell costs change some of the affected path candidates are replanned but the already best alternative is not effected by map cell updates, still the change in lower ranking alternatives may affect the ranking of the best alternative rendering it to a lower rank which would result in the need of changing the robot path on a faulty premise. Thus, operating the robot arrangement or planning a robot path of the robot arrangement, respectively, may be improved by the present invention. A planning according to the present invention may, in a preferred embodiment, operate on grid based maps or preexisting graphs that change dynamically, respectively, but may also operate differently, for example on potential fields or the like.

In a preferred embodiment two or more of the objective functions are in positive relation or correlation, respectively, and/or two or more of the objective functions are in negative relation or correlation, respectively, in a preferred embodiment two or more of the objective functions areconflicting with each other. Additionally or alternatively in a preferred embodiment two or more of the objective functions have different value dimensions. Additionally or alternatively one or more of the objective functions relates to, preferably depends on or comprises, respectively, a length of the robot path and/or one or more of the objective functions relates to, preferably depends on or comprises, respectively, a travel-time for (the robot arrangement to travel) the robot path and/or one or more of the objective functions relates to, preferably depends on or comprises, respectively, an energy consumption for (the robot arrangement to travel) the robot path and/or one or more of the objective functions relates to, preferably depends on or comprises, respectively, a coverage, preferably a network coverage, of the robot path and/or one or more of the objective functions relates to, preferably depends on or comprises, respectively, a risk, preferably risk factor, for the robot path, in particular one or more of the objective functions may relate to, preferably depend on or comprise, respectively, two or more of said quantities. Thus, just for example the objective group may comprise the travel-time and energy consumption which are conflicting with each other and have different value dimensions. For such objective( group)s the present invention is particularly advantageous since they can be addressed advantageously with pareto optimal robot paths. The so called Choquet-integral, in particular Choquet fuzzy integral, may be advantageously used which uses the concept of redundancy and synergy relations of criteria, wherein attributes that are in positive relation or correlation, respectively (e.g. path length may correlate positively with consumed energy) are considered redundant whereas criteria with negative relation or correlation, respectively, can be treated synergic.

In a preferred embodiment using decision making mitigating a rank reversal (between robot paths of the path group) may comprise using rank reversal free Multi-Criteria Decision Making ("MCDM") techniques. Thus, planning the robot path may be further improved, in particular may be performed faster and/or more robust.

In a preferred embodiment using decision making mitigating a rank reversal (between robot paths of the path group) may comprise using rank reversal mitigation techniques and/or rank reversal free MCDM techniques in the context of selecting the best solution as a a-posteriori step to Pareto Optimal planning. In a preferred embodiment determining a robot path, in particular the first robot path and/or the updated robot path of one or more cycles, based on (first or current, respectively) values of objective functions and a/the (first or current, respectively) criterion comprises determining a pareto front of feasible non-dominated robot paths based on said values of the objective functions and choosing one of said determined robot paths based on said criterion, wherein preferably (a) decision making (technique) mitigating or countering, respectively, a rank reversal between robot paths of the path group is used. Thus, planning the robot path may be further improved, in particular may be performed faster and/or more robust.

A preferable decision making mitigating a rank reversal may follow a tournament-style approach performing re-evaluations with less and less alternatives in each round based on fitting into a threshold interval, for example percentage from the best nominated alternative, to identify potential outlier alternatives or in each round simply select the top N best solutions and continuously reevaluate. Other preferable decision making mitigating a rank reversal may include sensitivity analysis, statistical analysis, cluster analysis, consistency checks, scenario analysis, Pareto-front analysis, influence analysis and/or graphical methods to pre-filter the alternatives to be included in the selection process to counter distorting effects. MCDM algorithms that are proven to be rank reversal free as they were designed to counter rank reversal are for example COMET, RAFSI, SPOTIS, ABAC and SIMUS. There are also algorithms like SAW (simple additive weighing) that do not use pairwise comparison, also utility based approaches like MAUT/MAVT, MAHP (modified AHP) and DEA that treat alternatives independently. Thus, planning the robot path may be further improved, in particular may be performed faster and/or more robust. Advantageous metrics or means to measure rank distributions, respectively, may include Spearman's rank correlation, Gini index, Average Overlap, Discounted Cumulative Gain. Within MAUT in a preferred embodiment Choquet-integral and Ordered Weighting Averaging (OWA) may be used.

In a preferred embodiment the decision making comprises a Dynamic M(ulti-)C(riteria)D(ecision)M(aking) method, in a preferred embodiment a dynamic extension of a MCDM method. Such DMCDM techniques may handle dynamic decision-making scenarios advantageously where criteria, criteria weights and alternatives or pareto optimal robot paths, respectively, dynamically change, in particular mitigating a rank reversal between robot paths of the respective path group.

In a preferred embodiment the criterion is updated in one or more cycles executing one or more behavior trees. This may further improve planning the robot path, in particular may increase speed and/or robustness and/or lower computational effort.

In a preferred embodiment the robot path is planned in a robot work space which is discretized, preferably into a grid or voxels, respectively. This may further improve planning the robot path, in particular may increase speed and/or robustness and/or lower computational effort. In a preferred embodiment the robot path has at least two dimensions, preferably at least three dimensions. The present invention is particularly advantageous for such robot paths.

According to one aspect of the present invention a method for operating a/the robot arrangement comprising (the) at least one robot comprises:
- planning a robot path of a/the robot arrangement according to a/the method as described herein; and
- operating said robot arrangement based on said planned robot path.

In a preferred embodiment one or more (of the) cycle(s) of the planning of the robot path is/are executed while operating the robot arrangement and wherein operating the robot arrangement is continued based on the updated robot path determined in said (respective) cycle.

Thus, the path may be advantageously (re-)planned during operation taking into consideration an updated criterion and/or updated values of the objective functions, in particular an updated path group, according to the present invention.

According to one aspect of the present invention a system is adapted or configured, respectively, to carry out a method described herein and/or comprises:
- means for providing an objective group of at least two objective functions to be optimized simultaneously by a robot path, each objective function mapping a robot path to a numeric value;
- means for determining first values of the objective functions;
- means for providing a first criterion for choosing a robot path from a path group of at least two robot paths which are pareto optimal with respect to the objective group so that for each of said robot paths none of the objective functions can be improved in value without degrading at least one of the other objective function values;
- means for determining a first robot path based on the first values of the objective functions and the first criterion;
- means for, preferably in one or more cycles, updating the criterion and/or the values of the objective functions; and
- means for, preferably in the one or more cycles, determining an updated robot path based on the current values of the objective functions and the current criterion using decision making mitigating a rank reversal between robot paths of the path group.

Means in the sense of the present invention and/or a system in the sense of the present invention can in particular be embodied by or comprise hardware and/or software respectively, in particular one or more programs or program modules and/or at least one, preferably digital, processing unit, in particular microprocessor unit (CPU), graphic card (GPU) or the like, preferably connected to a memory system and/or bus system data- or signalwise respectively, in particular at least one computer. The processing unit can be adapted to process commands that are implemented as a program stored in a memory system, to receive input signals from a data bus and/or to output signals to a data bus. A memory system can comprise one or more, in particular different and/or digital, storage media, in particular optical, magnetic, solid-state and/or other non-volatile media. The program can be (designed or implemented in) such (a way) that it embodies or is capable of executing a method described herein, so that the processing unit, in particular computer, can carry out the steps of such a method and thus in particular can plan the robot path and/or operate the robot arrangement.

In a preferred embodiment, a computer program can comprise, in particular, be a computer program product, preferably a, preferably non-volatile and/or computer-readable, storage medium for storing a program or commands or with a program or commands stored thereon, respectively. In one embodiment an execution of the program or commands respectively by a/the system, in particular a computer or an arrangement of computers, causes the system, in particular the computer or arrangement of computers, to carry out a method as described herein or one or more of its steps or the program or commands are adapted thereto, respectively.

In a preferred embodiment, one or more, in particular all, steps of the method are carried out completely or partially automatically, in particular by the system or its means, respectively.

In a preferred embodiment, the system comprises the robot arrangement.

In a preferred embodiment the (first and/or current) criterion relates to, preferably depends on or comprises, respectively, one or more, preferably weighted, objective functions of the objective group. Additionally or alternatively, the (first and/or current) criterion is a one-dimensional or multi-dimensional criterion or comprises two or more (sub)criteria, respectively, in a preferred embodiment. Thus, a decision making mitigating a rank reversal between robot paths of the path group used in determining the first and/or an updated robot path comprises, preferably is, a (Pareto) Multi-Criteria Decision Making in a preferred embodiment. In a preferred embodiment the weights or weighting, respectively, determines the (relative) importance of criteria, in particular an according input may be represented as a weight vector which designates the favored proportion or direction in the "quality space" of criteria, respectively.

Determining a/the (first and/or current) robot path based on the (first or current, respectively) values of the objective functions and the (first or current, respectively) criterion in a preferred embodiment comprises determining (the path group of) pareto optimal robot paths based on (first or current, respectively) values of the objective functions determined for different robot path( candidate)s and, preferably therein or subsequently, choosing one of said determined pareto optimal robot paths such that the (first or current, respectively) criterion is fulfilled.

Improving, degrading or optimizing an objective function (value) may in particular comprise, preferably be, minimizing or maximizing the objective function (value).

Mitigating a rank reversal includes or covers, respectively, avoiding a rank reversal but is not limitited to this. For example, dynamic MCDM methods may not guarantee rank reversal free behavior.

Further advantages and features can be gathered from the dependent claims and the exemplary embodiments. Hereto it is shown, partly schematically, in:
- Fig. 1:: a system according to one embodiment of the present invention;
- Fig. 2:: a pareto front of feasible non-dominated robot paths with respect to values of objective functions; and
- Fig. 3:: a method for operating a robot arrangement comprising planning a robot path according to one embodiment of the present invention.

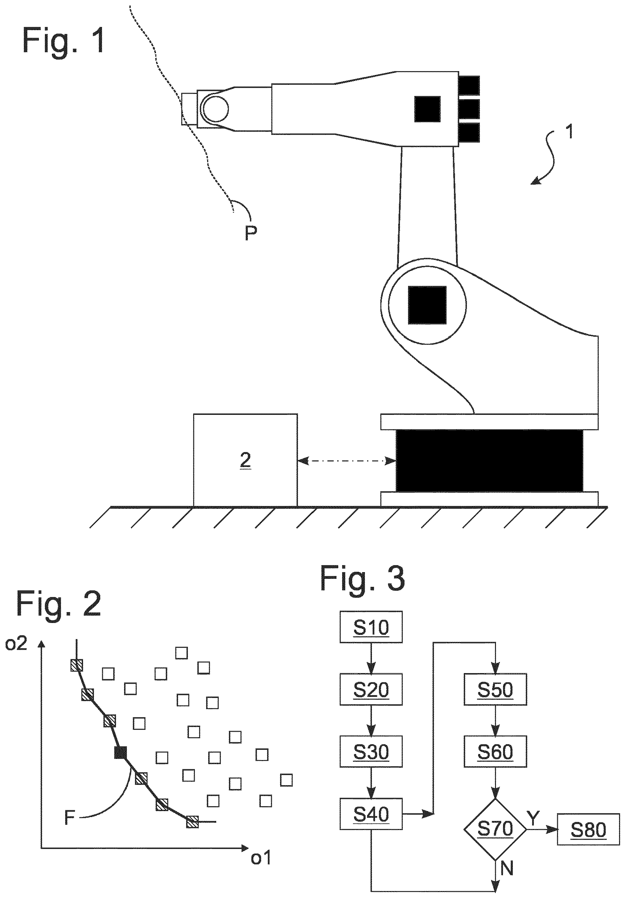

Fig. 1 shows a system according to one embodiment of the present invention comprising a robot 1 and a computer 2. One or more instances of a planner according to one embodiment of the present invention may run in a cloud. Additionally or alternatively digital twin concepts may be used, in particular a synchronization between one or more planner instances located on a robot controller and one or more planner instances located in the cloud. All these scenarios are schematically indicated by computer 2 in Fig. 1 which thus may in particular symbolize an arrangement of two or more computers, for example at least one robot controller and at least one cloud computer or server, respectively.

The system or computer(s) 2, respectively, performs a method explained in more detail with reference to Figs. 2, 3.

In a step S10 (see Fig. 3) an objective group of at least two objective functions o1, o2 (see Fig. 2) to be optimized simultaneously by a robot path P (see Fig. 1) is provided in or by the computer(s) 2, respectively.

In a step S20 a first criterion for choosing a robot path from a path group of at least two robot paths which are pareto optimal with respect to the objective group so that for each of said robot paths none of the objective functions can be improved in value without degrading at least one of the other objective function values is provided and first values of the objective functions are determined. In a step S30 a first robot path is determined based on the first values of the objective functions and the first criterion.

This is schematically illustrated in Fig. 2 where different boxes symbolize different robot path candidates. For each candidate the value of the objective functions o1, o2 is indicated at the horizontal or vertical axis, respectively. In the example, optimizing corresponds to minimizing the function values, i.e. boxes further left/lower are "better".

Hatched boxes indicate robot paths which are pareto optimal with respect to the objective group {o1, 2}: neither o1 or o2 of these paths can be improved (by switching to another of the considered paths) without degrading the other objective function value o2 or o1, respectively. Said pareto optimal robot paths define a pareto front F.

Using the first criterion one of these pareto optimal robot paths (black in Fig. 2) is chosen as the first robot path. This can in particular be performed after or while determining the pareto optimal robot paths.

Robot 1 starts to move along the planned first robot path. While the robot is moving (step S40), as described before with respect to steps S20, S30, in a step S50 the criterion and/or the values of the objective functions (and thus the path group of pareto optimal robot paths) are updated and in a step S60 an updated robot path is determined based on the current values of the objective functions and the current criterion. Decision making mitigating a rank reversal between robot paths of the current path group is used therein.

The cycle of steps S40-S70 (including the cycle of steps S50, S60) is repeated if the robot has not yet finished the (current) robot path (step S70: "N"). Otherwise, i.e. if the robot has finished the (current) robot path or reached its destination, respectively, (step S70: "Y"), the method is completed (step S80).

In the present disclosure "comprises one/an X" in general does not imply an exclusive list but is a short form of "comprises at least one/an X" and also comprises "comprises two or more X"- Although exemplary embodiments have been discussed in the preceding description, it should be pointed out that a large number of modifications are possible. It should also be pointed out that the exemplary embodiments are only examples that are not intended to limit the scope of protection or the possible applications and structure of the invention in any way. Rather, the person skilled in the art is given a guide for the realisation of at least one exemplary embodiment by the preceding description, wherein various modifications, in particular with regard to the function and arrangement of the described components or features, may be realized without leaving the scope of protection as derived from the claims and features combinations equivalent thereto respectively.

### Reference list

- 1: robot
- 2: computer
- F: pareto front
- o1, o2: objective function value
- P: robot path

## Claims

1. A method for planning a robot path of a robot arrangement comprising at least one robot (1), the method comprising:
- providing (S10) an objective group of at least two objective functions (o1, o2) to be optimized simultaneously by a robot path, each objective function mapping a robot path to a numeric value;
- determining (S20) first values of the objective functions;
- providing (S20) a first criterion for choosing a robot path from a path group of at least two robot paths which are pareto optimal with respect to the objective group so that for each of said robot paths none of the objective functions can be improved in value without degrading at least one of the other objective function values; and
- determining (S30) a first robot path based on the first values of the objective functions and the first criterion;
the method further comprising at least one cycle of the following steps:
- updating (S50) the criterion and/or the values of the objective functions; and
- determining (S60) an updated robot path based on the current values of the objective functions and the current criterion using decision making mitigating a rank reversal between robot paths of the path group.

2. The method according to claim 1, wherein at least two of the objective functions are in positive or negative relation and/or have different value dimensions.

3. The method according to any one of the preceding claims, wherein at least one of the objective functions relates to a length of the robot path, a travel-time for the robot path, an energy consumption for the robot path, a coverage of the robot path and/or a risk for the robot path.

4. The method according to any one of the preceding claims, wherein at least one of said at least one cycle comprises updating the path group based on the current values of the objective functions.

5. The method according to any one of the preceding claims, wherein determining a robot path based on values of objective functions and a criterion comprises determining a pareto front of feasible non-dominated robot paths based on said values of the objective functions and choosing one of said determined robot paths based on said criterion.

6. The method according to any one of the preceding claims, wherein the criterion is updated executing at least one behavior tree.

7. The method according to any one of the preceding claims, wherein the robot path is planned in a robot work space which is discretized and/or has at least two dimensions.

8. The method according to any one of the preceding claims, wherein the robot path comprises a travel of at least one mobile robot base and/or a trajectory of at least one robot arm.

9. The method according to any one of the preceding claims, wherein the robot arrangement comprises at least two robots.

10. The method according to any one of the preceding claims, wherein the decision making comprises a Dynamic MCDM method.

11. A method for operating a robot arrangement comprising at least one robot (1), the method comprising:
- planning a robot path of a robot arrangement according to the method according to any one of the preceding claims; and
- operating (S40) said robot arrangement based on said planned robot path.

12. The method according to the preceding claim, wherein at least one cycle of the planning of the robot path is executed while operating the robot arrangement and wherein operating the robot arrangement is continued based on the updated robot path determined in said cycle.

13. A system adapted to carry out a method according to any one of the preceding claims and/or comprising:
- means for providing an objective group of at least two objective functions (o1, o2) to be optimized simultaneously by a robot path, each objective function mapping a robot path to a numeric value;
- means for determining first values of the objective functions;
- means for providing a first criterion for choosing a robot path from a path group of at least two robot paths which are pareto optimal with respect to the objective group so that for each of said robot paths none of the objective functions can be improved in value without degrading at least one of the other objective function values;
- means for determining a first robot path based on the first values of the objective functions and the first criterion;
- means for updating the criterion and/or the values of the objective functions; and
- means for determining an updated robot path based on the current values of the objective functions and the current criterion using decision making mitigating a rank reversal between robot paths of the path group.

14. Computer program comprising instructions which, when the program is executed by a system according to the preceding claim, cause the system to carry out a method according to any one of the claims 1 - 12.
